# EUROPÄISCHE PATENTSCHRIFT

(11) **EP 1 245 840 B1**
(45) Veröffentlichungstag und Bekanntmachung des Hinweises auf die Patenterteilung: **06.09.2006**
(21) Anmeldenummer: 01810648.4
(22) Anmeldetag: 03.07.2001
(51) Int. Cl.: F16B 27/00, F16B 15/08, B25C 1/18

(54) **Magazin für Befestigungselemente**
Magazine for fastening elements
Magasin pour éléments de fixation

(30) Priorität: 28.03.2001 DE 10115369
(43) Veröffentlichungstag der Anmeldung: 02.10.2002
(73) Patentinhaber: HILTI Aktiengesellschaft, 9494 Schaan (LI)
(72) Erfinder: Pally, Andreas, 6340 Baar (CH); Daubinger, Gerd, 80935 München (DE)
(74) Vertreter: Wildi, Roland

(56) Entgegenhaltungen:
- DE-B- 2 022 136
- US-A- 4 581 964

## Beschreibung

Die Erfindung betrifft ein der Aufnahme mehrerer Befestigungselemente dienendes Magazin gemäss dem Oberbegriff des Patentanspruchs 1.

Aus der DE-2 022 136 ist ein Trägerkörper bekannt, der der Aufnahme und der Führung mehrerer hintereinander angeordneter Befestigungselemente dient, die einen Schaft und einen den Schaft in radialer Richtung überragenden Kopf aufweisen. Das Magazin wird gebildet von einem Auflagebereich, von dessen Längsrändern in Setzrichtung der Befestigungelemente jeweils ein Seitenbereich abragt.Die freien Endbereiche der beiden Seitenränder sind einander benachbart angeordnet. Zwischen dem Auflagebereich und den Seitenrändern bildet sich ein Raum, der sich über die gesamte Länge des Trägerkörpers erstreckt.

Das gesamte Magazins ist in mehrere, hintereinander angeordnete, der Aufnahme jeweils eines Befestigungselementes dienenden Aufnahmebereiche unterteilt. Die Unterteilung erfolgt mit Hilfe von im wesentlichen parallel zur Setzrichtung der Befestigungselemente verlaufenden Ausschnitten, die sich ausgehend von den sich berührenden freien Ende der beiden Seitenbereiche über einen Teil der Seitenbereiche erstrecken.

Im Auflagebereich jedes Aufnahmebereiches ist eine Durchtrittsöffnung angeordnet, deren Durchmesser grösser ist als der Schaft des Befestigungselementes und kleiner ist als der Kopf des Befestigungselementes. Koaxial zu dieser Durchtrittsöffnung ist eine von den beiden Endbereichen der Seitenbereiche gebildete Durchgangsöffnung angeordnet, deren Durchmesser im wesentlichen dem Schaftdurchmesser des Befestigungselementes entspricht.

Da sich der Kopf der Befestigungselemente in dem Raum des Magazins befindet, erfolgt die Führung des Nagels hauptsächlich über den setzrichtungsseitigen vorderen Abschnitt des Schaftes in der von den Seitenbereichen gebildeten Durchgangsöffnung.

US 4,581,964 zeigt einen Magazinstreifen, der eine Vielzahl von Abschnitten mit zwei zueinander beabstandeten, parallelen Haltewänden aufweist, die über eine Seitenwand verbunden sind und an denen jeweils einander gegenüberliegende X-förmige Öffnungen vorgesehen sind. In jeweils zwei gegenüberliegenden X-fömigen Öffnungen ist dabei ein Schaft einer Schraube mittig gehalten. Die X-förmigen Öffnungen erstrecken sich radial über den Kopf der Schraube hinaus, damit dieser beim Befestigungsdurchgang durch beide X-förmigen Öffnungen hindurch vom Magazinstreifen entfernt werden kann. Gegenüber der in Abschnitten unterteilten Seitenwand ist eine durchgehende Seitenwand vorgesehen, die von einer der Haltewände abragt und dabei zu der anderen Haltewand einen Spalt ausformt. Dieser Spalt wird von einem Transportmechanismus hintergriffen.

Der Erfindung liegt die Aufgabe zugrunde, ein Magazin mit einem Trägerkörper und mehreren Befestigungselementen zu schaffen, das einfach und wirtschaftlich herstellbar ist, eine gute Führung jedes einzelnen Befestigungselementes über zwei voneinander beabstandete Stellen am Schaft gewährleistet und bei dem die Trennung der Befestigungselemente von dem Magazin ohne grossen Kraftaufwand erfolgt.

Die Lösung dieser Aufgabe erfolgt durch ein Magazin, welches die im kennzeichnenden Abschnitt des Patentanspruchs 1 angeführten Merkmale aufweist.

Bei dem erfindungsgemässen Magazin wird jedes Befestigungselement im Bereich des Schaftes an zwei voneinander beabstandeten Stellen geführt. Diese Führung erfolgt mit der Durchtrittsöffnung im Auflagebereich und der Durchgangsbohrung im Endbereich der beiden Seitenränder. Die im Auflagebereich angeordneten Schlitze unterteilen den Umfangsbereich der Durchtrittsöffnung in mehrere kreisringförmige Segmente, die sich beim Setzvorgang des Befestigungselementes in Setzrichtung, von dem Kopf des Befestigungselementes bzw. einer auf dem Befestigungselement gelagerten, sich an dem Kopf abstützenden Dicht- und/oder Beilagscheibe, leicht in den Raum des Magazins schwenken lassen. Nach dem der Kopf die Durchtrittsöffnung passiert hat, gelangt die Aussenkontur des Kopfes bzw. der Dicht- und/oder Beilagscheibe mit der Innenkontur der beiden Seitenbereiche in Kontakt und weitet diese seitlich auf, sodass das der Kopf bzw. die Dicht- und/oder Beilagscheibe den Trägerkörper ungehindert verlassen kann.

Die Länge der Schlitze hat hierbei einen Einfluss auf das Schwenkverhalten der die Durchtrittsöffnung umgebenden kreisringförmigen Segmente. So lassen sich diese leichter in den Raum schwenken, wenn sich die Schlitze wesentlich über die Aussenkontur des Kopfes des Befestigungselementes bzw. der Dicht- und/oder Beilagscheibe erstrecken. Schlitze mit grosser Länge lassen sich bei gleichbleibendem Abstand der Befestigungselemente voneinander dadurch erreichen, indem einer ersten Durchtrittsöffnung wenigstens ein parallel zur Längserstreckung des Magazins verlaufender Schlitz sowie wenigstens ein senkrecht zur Längserstreckung des Magazins verlaufender Schlitz zugeordnet sind und wenigstens einer benachbarten Durchtrittsöffnung zur Längserstreckung des Magazins unter einem Winkel von 30° bis 60° verlaufender Schlitze zugeordnet sind.

Die Befestigungselemente liegen mit ihrem Kopf bzw. Dicht- und/oder Beilagscheibe auf dem beispielsweise flach ausgebildeten Auflagebereich und somit an der Aussenseite des Magazins auf. Damit dieser Kopf ohne grossen Kraftaufwand durch das Magazin hindurch geschoben werden kann, ist es notwendig, dass sich die kreisringförmigen Segmente leicht in den Raum des Magazins schwenken lassen. Um dies erreichen zu können, sind vorzugsweise vier Schlitze vorgesehen. Bei einer grösseren Anzahl von Schlitzen verringert sich die Länge der bogenförmigen Schwenkachse und somit der Widerstand, der dem Einschwenken der kreisringförmigen Segmente in den Raum entgegenwirkt.

Zweckmässigerweise nimmt die Breite der Schlitze mit zunehmender Entfernung von der Durchtrittsöffnung zu. Mit dieser besonderen Form der Schlitze wird eine Verkürzung der bogenförmigen Schwenkachsen der die Durchtrittsöffnung umgebenden, kreisringförmigen Segmente erreicht, so dass sich diese mit weniger Kraft in den Raum schwenken lassen.

Eine zusätzliche Führung der Befestigungselemente, bei denen die in Setzrichtung weisende kreisringförmige Stirnseite des Kopfes oder der Dicht- bzw. Beilagscheibe in Bezug zur Setzrichtung der Befestigungselemente konvex oder konkav ausgebildet ist, kann über den Auflagebereich erfolgen. Dieser weist zweckmässigerweise im Umfangsbereich der Durchtrittsöffnung einen konkaven oder einen konvexen Bereich auf.

Aus herstelltechnischen Gründen erstreckt sich der konkave oder konvexe Bereich vorzugsweise über die gesamte Länge des Trägerkörpers.

Damit das Magazin, beispielsweise in der Transportvorrichtung eines Gerätes, mit dem die Befestigungselemente in einen Untergrund gesetzt werden können, transportiert werden kann, weist der Trägerkörper zweckmässigerweise mehrere hintereinander angeordnete Transportkanten auf an denen ein Vorschubelement der Transportvorrichtung formschlüssig angreifen kann.

Damit ein Transportelement einer Transportvorrichtung sowohl in einer parallel zur Setzrichtung als auch in einer senkrecht zur Setzrichtung verlaufenden Richtung mit den Transportkanten des Magazins formschlüssig in Verbindung gebracht werden kann, wird vorzugsweise jede der Transportkanten von einer an den Längsrändern des Auflagebereiches angeordneten Ausnehmung gebildet. Die Transportkanten können aber auch von einzelnen hintereinander angeordneten Bohrungen in dem Auflagebereich gebildet sein, mit denen das Vorschubelement des Transportelement formschlüssig zusammenwirken kann.

Eine sich durch die Durchtrittsöffnung und die Durchgangsöffnung erstreckende Mittelachse verläuft im wesentlichen senkrecht zur Längserstreckung des Magazins. Diese Mittelachse kann aber auch unter einem Winkel zur Längserstreckung des Magazins angeordnet sein. Dies ist insbesondere dann der Fall, wenn das Magazin nicht senkrecht, sondern unter einem Winkel zur Setzrichtung einem Gerät zugeführt wird, mit dem die Befestigungselemente in einen entsprechenden Untergrund gesetzt werden können. Die Ausrichtung der Ausschnitte ist beispielsweise jeweils der Lage der vorgenannten Mittelachse angepasst, d.h. die Ausschnitte verlaufen im wesentlichen parallel zu der Mittelachse.

Der Trägerkörper ist beispielsweise aus einer dünnwandigen Polyesterfolie gebildet. Die Stärke dieser Folie beträgt beispielsweise 0,15 mm bis 1,5 mm. Der Trägerkörper kann aber auch aus einem ein- oder mehrlagigen Kunststoff, Papier, Karton oder Blech gebildet sein, wobei die einzelnen Lagen durch Kleben, Schweissen oder Pressen miteinander verbunden sind. Ein aus Papier oder Karton gebildeter Trägerkörper kann beispielsweise mit einer Imprägnierung gegen äussere Einflüsse wie insebesondere Feuchtigkeit oder Schmutz versehen sein.

Die Schlitze sind beispielsweise im Umfangsbereich der Durchtrittsöffnung geschlossen ausgebildet. Dieser im Umfangsbereich der Durchtrittsöffnung liegende geschlossene Bereich wird beispielsweise von einem kleinen Verbindungssteg gebildet, der beim Setzvorgang der Befestigungselemente zerstört wird, so dass ein ungehindertes Einschwenken der kreisringsförmigen Segmente in den Raum des Magazins möglich ist. Der Verbindungssteg gewährleistet die einheitliche Ausrichtung aller kreisringförmigen Segmente vor dem Setzvorgang der Befestigungselemente.

Vorteilhafterweise sind die der Durchtrittsöffnung gegenüberliegenden Endbereiche der elastischen Seitenbereiche im Abstand voneinander angeordnet, wobei der Abstand kleiner ist als der Durchmesser des Schaftes des Befestigungselementes. Diese Anordnung der beiden Eindbereiche hat den Vorteil, dass die Führung des Befestigungselementes im Bereich des Schaftes mit vier am Umfang des Schaftes linienförmig und im wesentlichen gleichmässig verteilt angeordneten Randbereichen der von den beiden Endbereichen gebildeten Durchgangsöffnung erfolgt.

Um eine hohe Formstabiliät des Aufnahmebereiches erreichen zu können, sind die Endbereiche der beiden Seitenbereiche zweckmässigerweise über eine lösbare, formschlüssige Verbindung miteinander verbunden.

Die Erfindung wird anhand von Zeichnungen, die ein Ausführungsbeispiel wiedergeben, näher erläutert. Es zeigen:
- Fig.1: einen Teil des erfindungsgemässen Magazins in der Seitenansicht;
- Fig. 2: das Magazin gemäss Fig. 1 in der Draufsicht;
- Fig. 3: ein weiteres Magazin in der Vorderansicht; der Auflagebereich weist einen konkaven Bereich auf;
- Fig. 4: das Magazin gemäss Fig. 1 in der Vorderansicht;
- Fig. 5: ein weiteres Magazin in der Vorderansicht; der Auflagebereich weist einen konvexen Bereich auf;
- Fig. 6: das Magazin gemäss Fig. 1 in der Perspektiv-Unteransicht
- Fig. 7: die einzelnen Stufen beim Setzvorgang eines Befestigungselementes gemäss Fig. 1;
- Fig. 8: ein weiteres Magazin vergrössert in der Vorderansicht.

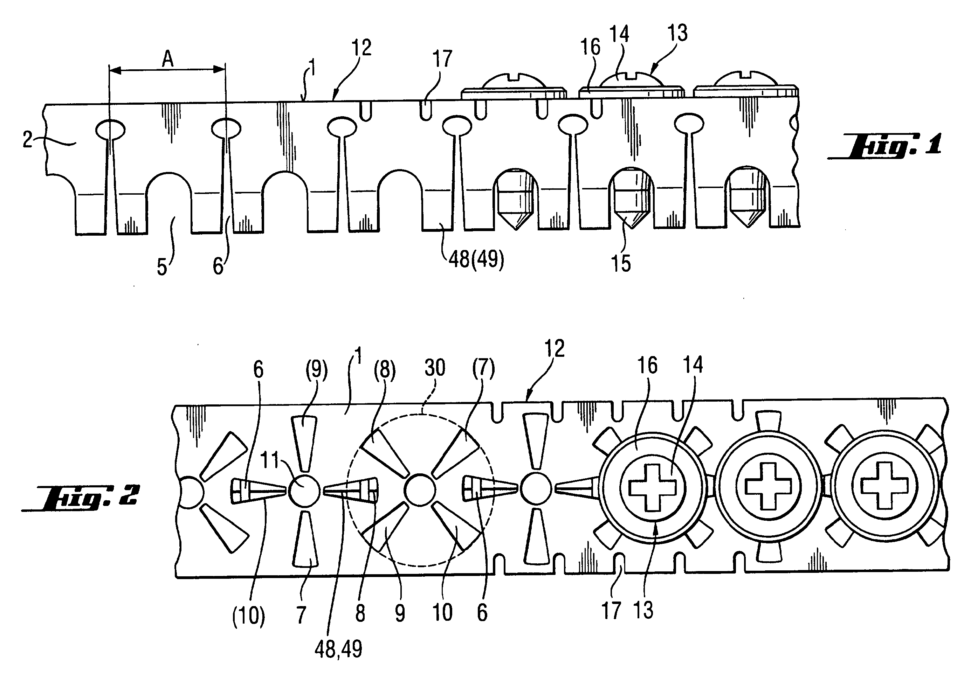

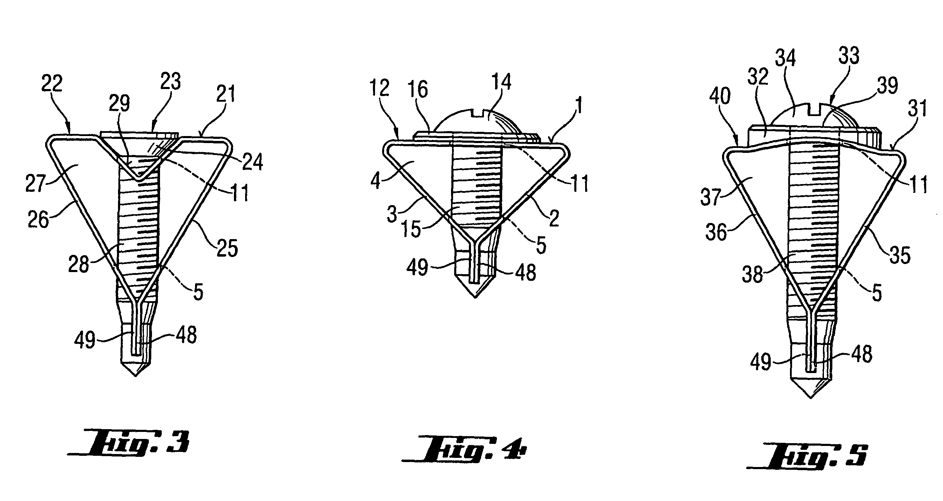

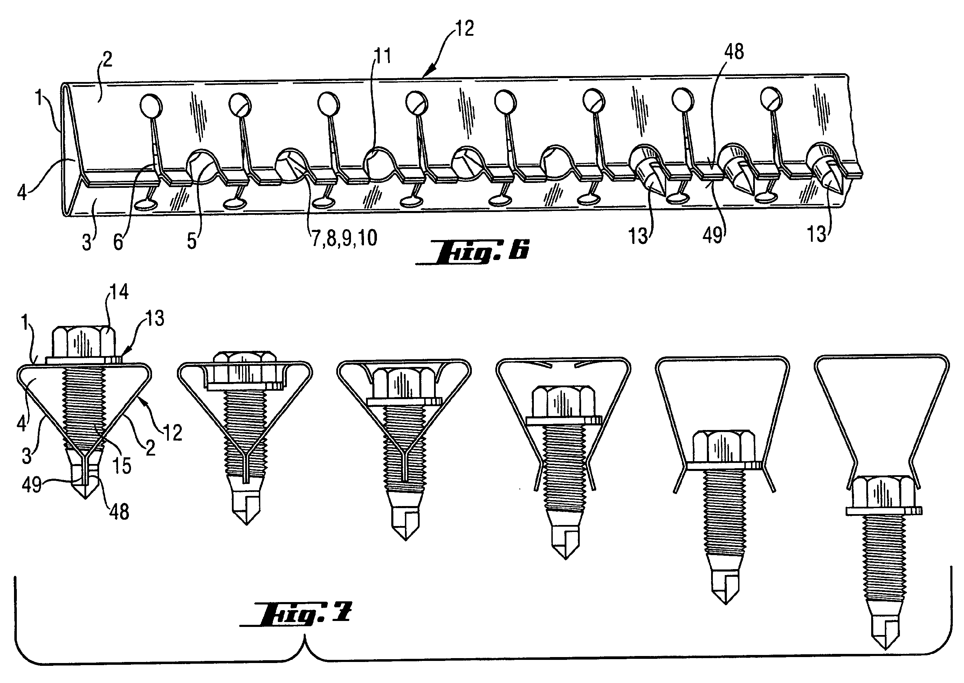

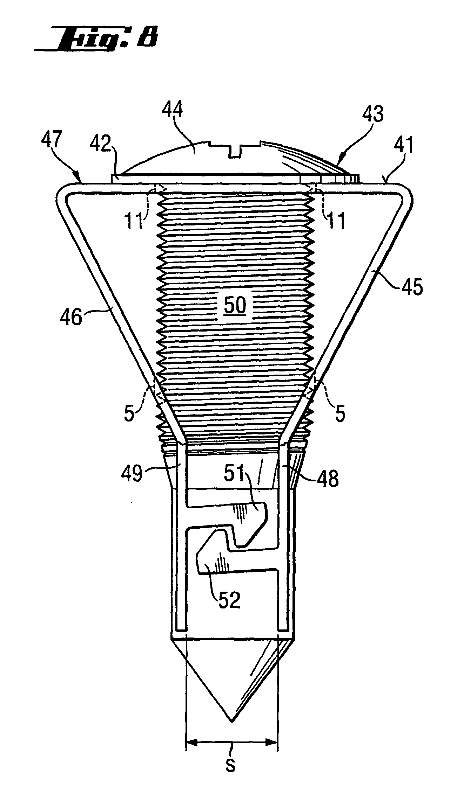

In den Fig. 1 bis 8 ist ein Magazin mit einem Trägerkörper 12, 22, 40, 47 und mehreren hintereinander, sowie im Abstand voneinander angeordneten Befestigungselementen 13, 23, 33, 43 bestückt, wobei der Trägerkörper 12, 22, 40, 47 der Aufnahme und der Führung der Befestigungselementes 13, 23, 33, 43 dient. Bei den Befestigungselementen 13, 23, 33, 43 handelt es sich beispielsweise um Schrauben, Bolzen oder Nägel, die einen Schaft 15, 28, 38, 50 und einen den Schaft 15, 28, 38, 50 radial überragenden Kopf 14, 24, 34, 44 aufweisen. Dabei können zur Auflagevergrösserung der Köpfe Beilagscheiben 16 untergelegt sein. Der Trägerkörper 12, 22, 40, 47 setzt sich aus einem Auflagebereich 1, 21, 31, 41 und zwei vom Auflagebereich 1, 21, 31, 41 in Setzrichtung der Befestigungselemente 13, 23, 33, 43 abragenden elastischen Seitenbereichen 2, 3, 25, 26, 35, 36, 45, 46 zusammen. Der Auflagebereich 1, 21, 31, 41 sowie die beiden, sich im wesentlichen parallel zur Setzrichtung erstreckenden Seitenbereiche 2, 3, 25, 26, 35, 36, 45, 46 umschliessen einen Raum 4, 27, 37, der sich über die gesamte Länge des Magazins erstreckt. Die vom Auflagebereich 1, 21, 31, 41 abgewandten freien Endbereiche 48, 49 beider Seitenbereiche 2, 3, 25, 26, 35, 36, 45, 46 sind einander benachbart angeordnet. Diese freien Endbereiche 48, 49 sind in der Regel nicht miteinander verbunden. Sie können aber auch durch Kleben oder Schweissen oder mechanische Verhakung (Fig. 8) lösbar miteinander verbunden sein.

Der Trägerkörper 12, 22, 40, 47 wird durch mehrere Ausschnitte 6 in einzelne Aufnahmbereiche A unterteilt, die im wesentlichen nur über den Auflagebereich 1, 21, 31, 41 einstückig miteinander verbunden sind. Die Ausschnitte 6 erstrecken sich vom freien Ende der beiden Seitenbereiche 2, 3, 25, 26, 35, 36, 45, 46 bis in die Nähe des Auflagebereiches 1, 21, 31, 41 Die Fig. 2 zeigt, dass jeder Aufnahmebereich A im Auflagebereich 1, 21, 31, 41 eine Durchtrittsöffnung 11 aufweist, deren Durchmesser im wesentlichen dem Schaftdurchmesser des Befestigungselementes 13, 23, 33, 43 entspricht. Die beiden freien Endbereiche beider Seitenbereiche 2, 3, 25, 26, 35, 36, 45, 46 bilden in jedem Aufnahmebereich A gemeinsam eine koaxial zur Durchtrittsöffnung 11 angeordnete Durchgangsöffnung 5. Sowohl die Durchtrittsöffnung 11 als auch die Durchgangsöffnung 5 dienen der Aufnahme und der Führung des Schaftes 15, 28, 38, 50 des Befestigungselementes 13, 23, 33, 43.

Der in den Fig. 3 und 5 dargestellte Auflagebereich 21, 31 ist beispielsweise mit einem konkaven oder konvexen Bereich 29, 39 versehen, der auf die in Setzrichtung weisende Aussenkontur des Kopfes 24, 34 bzw. der Dicht- bzw. Beilagscheibe 32 abgestimmt ist. Der konkave oder konvexe Bereich 29, 39 ist beispielsweise auf den Umfangsbereich der Durchtrittsöffnung begrenzt. Es ist beispielsweise aber auch möglich, dass sich dieser Bereich 29, 39, wie andeutungweise in den Fig. 3 und 5 dargestellt, über die gesamte Länge des Trägerkörpers 22, 40 erstreckt.

Wie aus der Fig. 2 ersichtlicht ist, sind im Umfangsbereich der Durchtrittsöffnung 11 vier Schlitze 7, 8, 9, 10 gleichmässig verteilt angeordnet. Diese Schlitze 7, 8, 9, 10 erstrecken sich ausgehend vom Umfang der Durchtrittsöffnung 11 in radialer Richtung bis zu einem Hüllkreis 30, der konzentrisch zur Durchtrittsöffnung 11 angeordnet ist. Die Breite der Schlitze 7, 8, 9, 10 nimmt mit zunehmender Entfernung von der Durchtrittsöffnung 11 zu und der Durchmesser des Hüllkreises 30 ist grösser wie der Kopfdurchmesser des Befestigungselementes 13, 23, 33. Einer ersten Durchtrittsöffnung 11 ist wenigstens ein parallel zur Längserstreckung des Magazins verlaufender Schlitz 8 sowie wenigstens ein senkrecht zur Längserstreckung des Trägerkörpers 12, 22, 40 verlaufender Schlitz 7 zugeordnet und wenigstens einer benachbarten Durchtrittsöffnung 11 sind Schlitze 9, 10 zugeordnet, die zur Längserstreckung des Trägerkörpers 12, 22, 40 unter einem Winkel von 45° verlaufen. Die Schlitze 7, 8, 9 10 können beispielsweise im Umfangsbereich der Durchtrittsöffnung 11 geschlossen ausgebildet sein.

Dem Transport des in den Fig. 1 bis 8 dargestellten Magazins in einer Transportvorrichtung eines nicht dargestellten Gerätes, mit dem die Befestigungselemente 13, 23, 33, 43 in einen ebenfalls nicht dargestellten Untergrund gesetzt werden können, dienen beispielsweise mehrere an dem Trägerkörper 12, 22, 40, 47 hintereinander angeordnete Transportkanten, an denen ein Vorschubelement der Transportvorrichtung formschlüssig angreifen kann. Diese Transportkanten werden beispielsweise von an den Längsrändern des Auflagebereiches 1, 21, 31, 41 angeordneten Ausnehmungen 17 gebildet.

Die Fig. 7 zeigt die einzelnen Schritte beim Ausstossen eines Befestigungselementes 13, 23, 33, beispielsweise einer Schraube mit eine Sechskantkopf, aus dem Trägerkörper 12, 22, 40 mit Hilfe eines entsprechenden, nicht dargestellten Eindrehwerkzeuges. Die erste Darstellung zeigt das Befestigungselement 13, 23, 33 in der Ausgangsstellung. Der Kopf 14, 24, 34 liegt auf jenen kreisringförmigen Segmenten des Auflagebereiches 1, 21, 31 auf, die sich zwischen den Schlitzen 7, 8, 9, 10 erstrecken. Sobald ein Druck auf das Befestigungselement 13, 23, 33 in Setzrichtung aufgebracht wird, schwenken diese kreisringförmigen Segmente des Auflagebereiches 1, 21, 31 in den Raum 4, 27, 37. Anschliessend gelangt die Aussenkontur des Kopfes 14, 24, 34 in Kontakt mit der Innenseite der beiden Seitenbereiche 2, 3, 25, 26, 35, 36. Die im wesentlichen seitlich auf diese Seitenbereiche 2, 3, 25, 26, 35, 36 einwirkende Kraft bewirkt ein Auseinanderdrücken der beiden Seitenbereiche 2, 3, 25, 26, 35, 36 des entsprechenden Aufnahmebereiches A, so dass auch der Kopf 14, 24, 34 aus dem Raum 4, 27, 37 des Trägerkörpers 12, 22, 40 gedrückt werden kann. Dabei wird beispielsweise ein sich zwischen den Endbereichen 48, 49 der Seitenbereiche 2, 3, 25, 26, 35, 36 befindliche Klebe- oder Schweissverbindung zerstört. Die kreisringförmigen Segmente des Auflagebereiches 1, 21, 31 nehmen nach dem Ausstossen des Befestigungselementes 13, 23, 33 aus dem Trägerkörper 12, 22, 40 ihre ursprüngliche Lage wieder ein.

Das in Fig. 8 dargestellte Magazin, weist einen Trägerkörper 47 auf, bei dem die sich an beide Seitenbereiche 45, 46 anschliessenden Endbereiche 48, 49 in einem Abstand S voneinander beabstandet sind. Der Abstand S ist kleiner als der Durchmesser des Schaftes 50 des Befestigungselementes 43. Diese Anordnung der beiden Endbereiche 48, 49 hat den Vorteil, dass die Führung des Befestigungselementes 43 im Bereich des Schaftes 50 mit vier am Umfang des Schaftes 50 linienförmig und im wesentlichen gleichmässig verteilt angeordneten Randbereichen der von den beiden Seitenbereichen 45, 46 und beiden Endbereichen 48, 49 gebildeten Durchgangsöffnung erfolgt.

Um eine hohe Formstabiliät des Aufnahmebereiches erreichen zu können, sind die Endbereiche 48, 49 der beiden Seitenbereiche zweckmässigerweise über eine lösbare, formschlüssige Verbindung miteinander verbunden. Diese lösbare, formschlüssige Verbindung wird beispielsweise von wenigstens einem hakenförmigen Element 51 gebildet, das von einem der beiden Endbereiche 49 abragt und ein Teil des anderen Endbereiches bzw. ein weiteres hakenförmiges Element 52 des anderen Endbereiches 48 formschlüssig hintergreift. Die formschlüssige Verbindung ist derart dimensioniert, dass sich die formschlüssige Verbindung aufhebt, wenn ein Befestigungselement 43 aus dem Aufnahmebereich des Trägerkörpers 47 gestossen wird.

## Patentansprüche

1. Magazin mit einem Trägerkörper (12, 22, 40, 47) und Befestigungselementen (13, 23, 33, 43), die einen Schaft (15, 28, 38, 50) sowie einen Kopf (14, 24, 34, 44) aufweisen, wobei der Trägerkörper (12, 22, 40, 47) mehrere hintereinander angeordnete, der Aufnahme und der Führung jeweils eines Befestigungselementes (13, 23, 33, 43) dienende, jeweils einen Raum (4, 27, 37) umschliessende Aufnahmebereiche (A) aufweist, die jeweils von einem, eine Durchtrittsöffnung (11) aufweisenden Auflagebereich (1, 21, 31, 41) und zwei vom Auflagebereich (1, 21, 31, 41) in Setzrichtung der Befestigungselemente (13, 23, 33, 43) abragenden elastischen Seitenbereichen (2, 3, 25, 26, 35, 36, 45, 46) gebildet werden, deren dem Auflagebereich (1, 21, 31, 41) abgewandte Endbereiche einander benachbart sind und gemeinsam eine koaxial zur Durchtrittsöffnung (11) angeordnete Durchgangsöffnung (5) bilden, die der Aufnahme und der Führung des Schaftes (15, 28, 38, 50) des Befestigungselementes (13, 23, 33, 43) dient, **dadurch gekennzeichnet, dass** der Durchmesser der Durchtrittsöffnung (11) im wesentlichen dem Durchmesser des Schaftes (15, 28, 38, 50) des Befestigungselementes (13, 23, 33, 43) entspricht und wenigstens zwei von der Durchtrittsöffnung (11) ausgehende, gleichmässig über deren Umfang verteilt angeordnete Schlitze (7, 8, 9, 10) sich bis zu einem Hüllkreis (30) erstrecken, dessen Durchmesser mindestens dem Durchmesser des Kopfes (14, 24, 34, 44) des Befestigungselementes (13, 23, 33, 43) entspricht, wobei einer ersten Durchtrittsöffnung (11) wenigstens ein parallel zur Längserstreckung des Magazins verlaufender Schlitz (8) sowie wenigstens ein senkrecht zur Längserstreckung des Magazins verlaufender Schlitz (7) zugeordnet sind und wenigstens einer benachbarten Durchtrittsöffnung (11) zur Längserstreckung des Magazins unter einem Winkel von 30° bis 60° verlaufende Schlitze (9, 10) zugeordnet sind.

2. Magazin nach Anspruch 1, **dadurch gekennzeichnet, dass** vier Schlitze (7, 8, 9, 10) vorgesehen sind.

3. Magazin nach Anspruch 1 oder 2, **dadurch gekennzeichnet, dass** die Breite der Schlitze (7, 8, 9, 10) mit zunehmender Entfernung von der Durchtrittsöffnung (11) zunimmt.

4. Magazin nach einem der Ansprüche 1 bis 3, **dadurch gekennzeichnet, dass** der Auflagebereich (1, 21, 31, 41) zumindest im Umfangsbereich der Durchtrittsöffnung (11) einen konkaven Bereich (29) oder einen konvexen Bereich (39) aufweist.

5. Magazin nach Anspruch 4, **dadurch gekennzeichnet, dass** sich der konkave oder konvexe Bereich (29, 39) über die gesamte Länge des Trägerkörpers (12, 22, 40 47) erstreckt.

6. Magazin nach einem der Ansprüche 1 bis 5, **dadurch gekennzeichnet, dass** der Trägerkörper (12, 22, 40, 47) mehrere hintereinander angeordnete Transportkanten aufweist.

7. Magazin nach Anspruch 6, **dadurch gekennzeichnet, dass** jede der Transportkanten von einer an den Längsrändern des Auflagebereiches (1, 21, 31, 41) angeordneten Ausnehmung (17) gebildet ist.

8. Magazin nach einem der Ansprüche 1 bis 7, **dadurch gekennzeichnet, dass** die der Durchtrittsöffnung (11) gegenüberliegenden Endbereiche der elastischen Seitenbereiche (2, 3, 25, 26, 35, 36, 45, 46) im Abstand (S) voneinander angeordnet sind, wobei der Abstand (S) kleiner ist als der Durchmesser des Schaftes (50) des Befestigungselementes (43).

9. Magazin nach Anspruch 8, **dadurch gekennzeichnet, dass** die Endbereich (48, 49) der beiden Seitenbereiche (45, 46) über eine lösbare, formschlüssige Verbindung miteinander verunden sind.

## Claims

1. Magazine with a carrier body (12, 22, 40, 47) and fastening elements (13, 23, 33, 43) that have a shank (15, 28, 38, 50) and a head (14, 24, 34, 44), wherein the carrier body (12, 22, 40, 47) has a plurality of holding regions (8) arranged one after the other, each serving to hold and guide a fastening element (13, 23, 33, 43) and each enclosing a space (4, 27, 37), and each formed by a bearing region (1, 21, 31, 41) having a through hole (11) and two elastic side regions (2, 3, 25, 26, 35, 36, 45, 46) projecting from the bearing region (1, 21, 31, 41) in the setting direction of the fastening elements (13, 23, 33, 43) with their end regions remote from the bearing region (1, 21, 31, 41) juxtaposed and jointly forming a through opening (5) arranged coaxially with the through hole (11) and serving to hold and guide the shank (15, 28, 38, 50) of the fastening element (13, 23, 33, 43), **characterized in that** the diameter of the through hole (11) is substantially equal to the diameter of the shank (15, 28, 38, 50) of the fastening element (13, 23, 33, 43), and at least two slits (7, 8, 9, 10) radiating from the through hole (11) and pitched equally around its periphery extend out to an enveloping circle (30) whose diameter is at least equal to the diameter of the head (14, 24, 34, 44) of the fastening element (13, 23, 33, 43), with at least one slit (8) that extends parallel with the longitudinal extension of the magazine and at least one slit (7) that extends perpendicularly to the longitudinal extension of the magazine assigned to a first through hole (11), and slits (9, 10) that extend at an angle of 30° to 60° to the longitudinal extension of the magazine assigned to at least one adjacent through hole (11).

2. Magazine according to Claim 1, **characterized in that** four slits (7, 8, 9, 10) are provided.

3. Magazine according to Claim 1 or Claim 2, **characterized in that** the width of the slits (7, 8, 9, 10) increases with increasing distance from the through hole (11).

4. Magazine according to any one of Claims 1 to 3, **characterized in that** the bearing region (1, 21, 31, 41) has a concave region (29) or convex region (39) at least in the peripheral region of the through hole (11).

5. Magazine according to Claim 4, **characterized in that** the concave or convex region (29, 39) extends over the whole length of the carrier body (12, 22, 40, 47).

6. Magazine according to any one of Claims 1 to 5, **characterized in that** the carrier body (12, 22, 40, 47) has a plurality of feed edges.

7. Magazine according to Claim 6, **characterized in that** each feed edge is formed by a notch (17) in the longitudinal edges of the bearing region (1, 21, 31, 41).

8. Magazine according to any one of Claims 1 to 7, **characterized in that** the end regions of the elastic side regions (2, 3, 25, 26, 35, 36, 45, 46) opposite the through hole (11) are spaced apart at a distance (S) which is less than the diameter of the shank (50) of the fastening element (43).

9. Magazine according to Claim 8, **characterized in that** the end regions (48, 49) of the two side regions (45, 46) are joined to each other by a releasable positive connection.

## Revendications

1. Magasin avec un corps porteur (12, 22, 40, 47) et des éléments de fixation (13, 23, 33, 43) qui comportent une tige (15, 28, 38, 50) ainsi qu'une tête (14, 24, 34, 44), le corps porteur (12, 22, 40, 47) comportant plusieurs zones réceptrices disposées les unes derrière les autres (A) qui servent chacune à recevoir et à guider un élément de fixation (13, 23, 33, 43) et entourent chacune un espace (4, 27, 37) et qui sont chacune formées par une zone d'appui (1, 21, 31, 41) pourvue d'une ouverture traversante (11) et par deux zones latérales élastiques (2, 3, 25, 26, 35, 36, 45, 46) qui, à partir de la zone d'appui (1, 21, 31, 41), s'étendent dans la direction de scellement des éléments de fixation (13, 23, 33, 43) et dont les zones d'extrémité orientées à l'opposé de la zone d'appui (1, 21, 31, 41) sont voisines les unes des autres et forment ensemble une ouverture débouchante (5) disposée coaxialement à l'ouverture traversante (11) et servant à recevoir et à guider la tige (15, 28, 38, 50) de l'élément de fixation (13, 23, 33, 43), **caractérisé en ce que** le diamètre de l'ouverture traversante (11) correspond sensiblement au diamètre de la tige (15, 28, 38, 50) de l'élément de fixation (13, 23, 33, 43), et au moins deux fentes (7, 8, 9, 10) partant de l'ouverture traversante (11) et régulièrement réparties sur la circonférence de celle-ci s'étendent jusqu'à un cercle d'enveloppe (30) dont le diamètre correspond au moins au diamètre de la tête (14, 24, 34, 44) de l'élément de fixation (13, 23, 33, 43), au moins une fente (8) parallèle à l'extension longitudinale du magasin ainsi qu'au moins une fente (7) perpendiculaire à l'extension longitudinale du magasin étant associées à une première ouverture traversante (11), et des fentes (9, 10) orientées selon un angle de 30° à 60° par rapport à l'extension longitudinale du magasin étant associées à au moins une ouverture traversante voisine (11).

2. Magasin selon la revendication 1 ou 2, **caractérisé en ce que** quatre fentes (7, 8, 9, 10) sont prévues.

3. Magasin selon la revendication 1 ou 2, **caractérisé en ce que** les fentes (7, 8, 9, 10) augmentent en largeur à mesure qu'elles s'éloignent de l'ouverture traversante (11).

4. Magasin selon une des revendications 1 à 3, **caractérisé en ce que** la zone d'appui (1, 21, 31, 41) comporte, au moins dans la zone circonférentielle de l'ouverture traversante (11), une zone concave (29) ou une zone convexe (39).

5. Magasin selon la revendication 4, **caractérisé en ce que** la zone concave ou convexe (29, 39) s'étend sur toute la longueur du corps porteur (12, 22, 40, 47).

6. Magasin selon une des revendications 1 à 5, **caractérisé en ce que** le corps porteur (12, 22, 40, 47) comporte plusieurs arêtes de transport disposées les unes derrière les autres.

7. Magasin selon la revendication 6, **caractérisé en ce que** chacune des arêtes de transport est formée par un évidement (17) ménagé sur les bords longitudinaux de la zone d'appui (1, 21, 31, 41).

8. Magasin selon une des revendications 1 à 7, **caractérisé en ce que** les zones d'extrémité, opposées à l'ouverture traversante (11), des zones latérales élastiques (2, 3, 25, 26, 35, 36, 45, 46) sont disposées à distance (S) l'une de l'autre, la distance (S) étant inférieure au diamètre de la tige (50) de l'élément de fixation (43).

9. Magasin selon la revendication 8, **caractérisé en ce que** les zones d'extrémité (48, 49) des deux zones latérales (45, 46) sont reliées entre elles par l'intermédiaire d'une liaison détachable par complémentarité de formes.
